# EUROPEAN PATENT APPLICATION

(11) **EP 3 361 367 A1**
(43) Date of publication of application: **15.08.2018**
(21) Application number: 18155581.4
(22) Date of filing: 07.02.2018
(51) Int. Cl.: G06F 3/0482, G06F 3/0485, G06F 3/0488, G06F 3/0354, G01C 21/36, B60K 35/00, B60K 37/00

(54) **IN-VEHICLE INPUT DEVICE, IN-VEHICLE INPUT SYSTEM, AND IN-VEHICLE INPUT DEVICE CONTROL METHOD**

(30) Priority: 10.02.2017 JP 2017023203
(71) Applicant: Toyota Jidosha Kabushiki Kaisha, Aichi-Ken 471-8571 (JP)
(72) Inventor: TANAKA, Seiichi, Aichi-ken, 471-8571 (JP); TAKEUCHI, Yusuke, Aichi-ken, 471-8571 (JP)
(74) Representative: J A Kemp

(57) **Abstract**

In a state where a plurality of arranged objects in a predetermined direction is displayed and the selector presents one of the arranged objects which is nearest an end of a display unit, an in-vehicle input device scrolls the plurality of arranged objects and causes the display control unit to display the objects when the input once becomes undetected by the position detection unit and, after that, an input specifying a direction of an end near to a selected object is detected, and causes the display control unit to hold a state in which the selector presents the object nearest to the end when the input specifying the direction of the end near to a selected object is continued without interruption.

## Description

### BACKGROUND OF THE INVENTION

### 1. Field of the Invention

The present invention relates to an in-vehicle input device, an in-vehicle input system and an in-vehicle input device control method.

### 2. Description of Related Art

There is a display operation device that includes a touch pad, which is operated by touching the operation surface with a finger, and a mode switching operation unit. The mode switching operation unit is provided to switch between a first operation mode and a second operation mode. In the first operation mode, the display content in the second layer is changed without changing the display content in the first layer displayed on a remote display, according to an operation on the touch pad. In the second operation mode, the display content in the first layer is changed according to an operation on the touch pad.

For example, in the first operation mode (selection mode), the Point of Interest (POI) at the position corresponding to the slide operation, which is one of the POIs displayed on the map, is emphasized in the second layer without scrolling the map in the first layer. In the second operation mode (scroll mode), the map is scrolled according to the slide operation (for example, see Japanese Patent Application Publication No. 2013-222214 (JP 2013-222214 A)).

### SUMMARY OF THE INVENTION

In the above display operation device (input device), switching between the image-scrolling operation mode and the non-image-scrolling operation mode requires the user to operate the mode switching operation unit configured by a predetermined part of the touch pad operation surface or by a switch provided separately from the touch pad.

A predetermined part of the touch pad operation surface and a switch provided separately from the touch pad are switches dedicated for switching the mode. To switch between the two modes, the user must move the finger to the dedicated switch.

When moving the finger to the dedicated switch, the user may look aside while driving the vehicle. Even when the vehicle is stationary, the user must visually observe the dedicated switch before using it or, even when the user does not observe the dedicated switch, the user must pay some attention to the dedicated switch when operating it.

According to the above display operation above display operation device (input device) has a problem that the vehicle user cannot easily switch between the image-scrolling operation mode and the non-image-scrolling operation mode.

It is therefore an object of the present invention to provide an in-vehicle input device and an in-vehicle input device control method that allows the user to easily switch between the image-scrolling operation mode and the non-image-scrolling operation mode without providing a dedicated switch.

An in-vehicle input device according to a first aspect of the disclosure includes: an operation input detection unit arranged in a vehicle interior, the operation input detection unit configured to detect an input made by a user, the input specifying an operation direction; a display unit arranged at a position in the vehicle interior different from a position of the operation input detection unit, the display unit configured to display a plurality of objects arranged along a first direction, the first direction is a direction from a first end of the display unit to a second end of the display unit, the plurality of objects being scrollable in the first direction; a display control unit configured to control the displaying by the display unit, and switch a display state of an object in the plurality of objects between a first state and a second state in response to the input made by the user, the first state representing that the object is selected, the second state representing that the object is not selected, one of the plurality of objects being displayed in the first state; and an operation content determination unit configured to scroll the plurality of objects in the first direction and cause the display control unit to display the objects when the input by the user once becomes undetected by the operation input detection unit and, after that, an input specifying a second direction is detected in a state where an object nearest to the first end of the display is selected, the second direction is a direction from the second end of the display to the first end of the display, and cause the display control unit to hold the plurality of objects and the state where the object nearest to the first end of the display is selected when the input specifying the second direction is continuously detected by the operation input detection unit without interruption in the state where the object nearest to the first end of the display is selected.

In this way, the user can easily switch between the image scrolling operation mode and the non-image-scrolling mode by performing the operation differently between the two cases. In one case, the user once ends the operation input (operation input once becomes undetected) and, after that, moves the position of the operation input along the predetermined direction. In the other case, the user moves the position of the operation input along the predetermined direction until the operation input exceeds the object nearest to the end.

Therefore, the present invention provides an in-vehicle input device that eliminates the need for a dedicated switch and allows the user to easily switch between the image-scrolling operation mode and the non-image-scrolling operation mode.

In the above aspect, the operation input detection unit may include a position detection unit configured to detect a position indicated by the user and the input specifying the operation direction by a trajectory of a change in the position.

In the above aspect, the display control unit may be configured to control the display unit so as to display continuously the object which is displayed immediately before the input becomes undetected when the input is detected again by the operation input detection unit after changing from a state in which the input is detected by the operation input detection unit to a state in which the input is not detected by the operation input detection unit.

In the above aspect, the first state may be a state that an image of a cursor or a pointer is overlaid on the object.

In this way, the use of the object selection cursor as a selector makes it easy to select an object.

Therefore, the present invention provides an in-vehicle input device that allows the user to easily switch the mode and, at the same time, to quickly recognize the cursor while ensuring the visibility of the whole screen.

An in-vehicle input system according to a third aspect of the disclosure includes: a screen configured to display a selection state of an operation of an apparatus mounted in a vehicle interior; a detection unit configured to detect a movement of a hand or a finger of a user, wherein the screen is configured to display a scroll unit in a part of an area on the screen to allow the selection state to be changed by scrolling, when an end of the scroll unit in a selection direction is selected by the detection unit, the selection state of the end of the selection direction of the scroll unit is held if it is detected that the movement of the hand or the finger detected by the detection unit is a continuous movement in a scroll direction, and the selection state that is not yet displayed is scrolled for display if it is detected that the movement of the hand or the finger detected by the detection unit is a non-continuous movement in the scroll direction.

In this way, the user can easily switch between the image scrolling operation mode and the non-image-scrolling mode by performing the operation differently between the two cases. In one case, the movement of the hand or the finger is a continuous movement in the scroll direction. In the other case, the movement of the hand or the finger is a non-continuous movement in the scroll direction.

Therefore, the present invention provides an in-vehicle input device that eliminates the need for a dedicated switch and allows the user to easily switch between the image-scrolling operation mode and the non-image-scrolling operation mode.

An in-vehicle input device control method according to a forth aspect of the disclosure includes: detecting, by an operation input detection unit, an input made by a user, the operation input detection unit being arranged in a vehicle interior, the input specifying an operation direction; displaying, by a display unit arranged at a position in the vehicle interior different from a position of the operation input detection unit, a plurality of arranged objects along a first direction, the first direction is a direction from a first end of the display unit to a second end of the display unit, the plurality of objects being scrollable in the first direction; controlling, by a display control unit, the display performed by the display unit; switching a display state of an object in the plurality of objects between a first state and a second state in response to the input made by the user, the first state representing that the object is selected, the second state representing that the object is not selected, one of the plurality of objects being displayed in the first state; scrolling, by an operation content determination unit , the plurality of objects in the first direction and causing the display control unit to display the objects when the input by the user once becomes undetected by the operation input detection unit and, after that, an input specifying a second direction is detected in a state where an object nearest to the first end of the display is selected, the second direction is a direction from the second end of the display to the first end of the display; and causing, by the operation content determination unit, the display control unit to hold the plurality of objects and the state where the object nearest to the first end of the display is selected when the input specifying the second direction is continuously detected by the operation input detection unit without interruption in the state where the object nearest to the first end of the display is selected.

In this way, the user can easily switch between the image scrolling operation mode and the non-image-scrolling mode by performing the operation differently between the two cases. In one case, the user once ends the operation input (operation input once becomes undetected) and, after that, moves the position of the operation input along the predetermined direction. In the other case, the user moves the position of the operation input along the predetermined direction until the operation input exceeds the object nearest to the end.

Therefore, the present invention can provide an in-vehicle input device control method that eliminates the need for a dedicated switch and allows the user to easily switch between the display-scrolling operation mode and the non-display-scrolling operation mode.

The present invention can provide an in-vehicle input device and an in-vehicle input device control method that allow the user to easily operate an object in which the selection items are continuously replaced for display.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram showing the interior of a vehicle 10 to which an in-vehicle input device according to an embodiment is applied;
FIG. 2 is a diagram showing a configuration of an in-vehicle input device according to an embodiment;
FIG. 3A is a diagram showing the operation screen of an air conditioner;
FIG. 3B is a diagram showing the operation screen of an air conditioner;
FIG. 3C is a diagram showing the operation screen of an air conditioner;
FIG. 3D is a diagram showing the operation screen of an air conditioner;
FIG. 4A is a diagram showing an operation input when the temperature setting is changed on the operation screen of an air conditioner;
FIG. 4B is a diagram showing an operation input when the temperature setting is changed on the operation screen of an air conditioner;
FIG. 4C is a diagram showing an operation input when the temperature setting is changed on the operation screen of an air conditioner;
FIG. 4D is a diagram showing an operation input when the temperature setting is changed on the operation screen of an air conditioner; and
FIG. 5 is a flowchart showing the processing executed by an operation content determination unit 111 of a DCU 110.

### DETAILED DESCRIPTION OF EMBODIMENTS

An embodiment in which an in-vehicle input device and an in-vehicle input device control method of the present invention are applied will be described below.

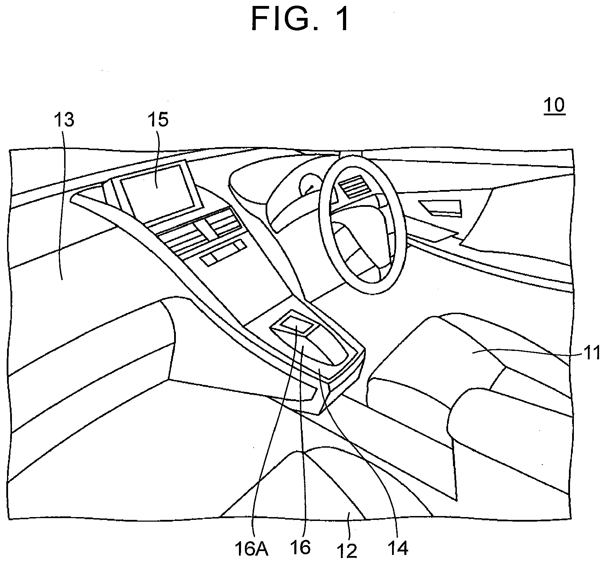

<Embodiment> FIG. 1 is a diagram showing the interior of a vehicle 10 to which the in-vehicle input device according to an embodiment is applied. In the interior of the vehicle 10, a dashboard 13 is arranged in front of a driver's seat 11 and a front passenger seat 12 and, in addition, a center console 14 is arranged from the center of the dashboard 13 to the space between the driver's seat 11 and the front passenger seat 12.

A display panel 15 is arranged in the center of the dashboard 13, and an input unit 16 is arranged in the forward part of the center console 14 (on the side nearer to the dashboard 13). The input unit 16 has a touch pad 16A.

An example of the display panel 15 is a liquid crystal panel. A display panel of a type other than a liquid crystal panel may also be used as the display panel 15. The display panel 15 can display various screens such as the screen for the navigation system, the screen for setting the traveling mode of the vehicle, the screen for setting the air conditioner, the operation screen for the audio player, and the operation screen for the phone. Various screens (images) are displayed on the display panel 15 according to the selected mode (setting of the navigation system and the traveling mode, and the mode for executing functions such as those of the air conditioner, audio player, and phone).

The touch pad 16A, for example, either a capacitance type or a resistance film type, detects the position (coordinates) of a user's finger that touches the surface of the touch pad 16A. The touch pad 16A is used by the user to move a cursor displayed on various screens displayed on the display panel 15. In the description below, an input performed by the user by touching and operating surface of the touch pad 16A with a finger to operate the screen is called an operation input. Although the touch pad 16A can be operated not only with a finger but also with a portion other than the finger of the hand, the operation with a finger will be described below.

The in-vehicle input device of the embodiment includes the display panel 15 and the input unit 16. The movement direction and the movement amount of an operation input performed on the touch pad 16A are associated with the movement direction and the movement amount of the cursor on the display panel 15.

When the user performs an operation input on the touch pad 16A with the finger, the cursor displayed on the display panel 15 moves. The cursor is used for selecting an object such as various Graphic User Interface (GUI) items. Examples of GUI items include a button, a slider, and a dial. Although described as a cursor in this specification, the cursor may be regarded as a pointer.

The display surface of the display panel 15 is rectangular, and the operation surface of the touch pad 16A is also rectangular. The movement direction of an operation input, performed by the user on the touch pad 16A, is the same as the movement direction of the cursor. That is, when the position of an operation input moves to the left position, the cursor displayed on the display panel 15 also moves to the left position. Similarly, when the position of an operation input moves to the right, upper (forward of the vehicle), or lower (backward of the vehicle) position, the cursor displayed on display panel 15 also moves to the right, upper, or lower position.

In this manner, the cursor displayed on the display panel 15 can be moved by an operation input onto the touch pad 16A. By moving the cursor, an object, such as various GUI items displayed on the display panel 15, can be selected. Furthermore, by pressing the touch pad 16A, an input to an object, such as the selected GUI item, can be confirmed. An input by pressing the touch pad 16A is detected, for example, by a change in the area of the finger that touches the touch pad 16A.

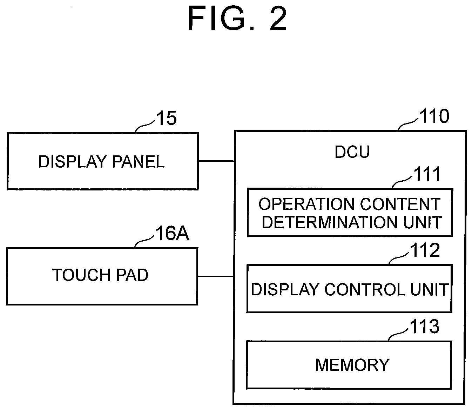

FIG. 2 is a diagram showing a configuration of the in-vehicle input device according to the embodiment. The in-vehicle input device includes a Display Control Unit (DCU) 110, the display panel 15, and the touch pad 16A. The display panel 15 is an example of a display unit, and the touch pad 16A is an example of an operation input detection unit that has a position detection unit. In the following description, it is assumed that an object displayed on the display panel 15 is a GUI button.

The DCU 110, one type of an Electric Control Unit (ECU), is a control device that controls an image displayed on the display panel 15. The DCU 110 includes an operation content determination unit 111, a display control unit 112, and a memory 113.

Like various ECUs mounted in the vehicle 10, the DCU 110 is implemented by a computer that includes, for example, a Central Processing Unit (CPU), a Random Access Memory (RAM), a Read Only Memory (ROM), a nonvolatile memory such as a hard disk, a clock generation unit, an input/output interface, a communication interface, a transmission/reception unit, and an internal bus.

The DCU 110 has the function to display various images for various items (such as the items for setting the traveling mode of the vehicle, the items for the air conditioner, the items for the audio player, and the items for the phone) and the function to receive an operation input from the user. The DCU 110 transfers a command, represented by an accepted operation input, to various ECUs such as the ECU for setting the traveling mode of the vehicle and the ECU of the air conditioner.

The operation content determination unit 111 calculates the corresponding position on the display panel 15 that corresponds to the position of an operation input detected by the touch pad 16A, based on the movement amount of the position of the operation input detected by the touch pad 16A.

In addition, when a plurality of GUI items capable of being scrolled by sliding the finger on the touch pad 16A are displayed on the display panel 15, the operation content determination unit 111 determines whether the operation input is once ended in the state in which a cursor 150 has been moved along the arrangement direction of the plurality of GUI items and is now displayed on the GUI item at the end of the display panel 15.

Finger sliding described here refers to the operation of moving the finger, with the finger touching the touch pad 16A, to move the position of the input. The finger sliding operation is, for example, a swipe operation, a drag operation, and a flick operation. The direction from the position before moving the finger to the position after moving the finger is the operation direction, which is designated by the finger sliding operation. In the description below, an operation input that indicates the operation direction may be simply referred to as an operation input.

When an operation input is once ended and, after that, an operation input indicating the same operation direction is performed again, the operation content determination unit 111 scrolls the image of the GUI items. As a result, the plurality of GUI items is displayed on the display panel 15 with the GUI items replaced in part or in whole.

On the other hand, with the cursor 150 displayed on the GUI item at the end, the operation input is performed exceeding the GUI item at the end without ending the operation input (the operation input is continued without interruption), the operation content determination unit 111 maintains the state in which the cursor 150 is displayed on the GUI item at the end.

In this way, when the cursor 150 is displayed on the GUI item at the end, the operation content determination unit 111 is configured to allow the user to perform one of the two operations, the operation to scroll the GUI items displayed on the display panel 15 and the operation to leave the cursor 150 displayed on the GUI item at the end, depending upon whether the operation input is once ended and, after that, is performed again in the GUI item at the end or the operation input is not ended but is performed exceeding the GUI item at the end.

When the operation input once becomes undetected by the touch pad 16A and, after that, the operation input is detected again, the operation content determination unit 111 sets the new cursor position, where the operation input is detected again, equal to the old cursor position where the operation input once became undetected. The operation content determination unit 111 sets these cursor positions equal as described above to allow the same cursor to be selected even if the position detected by the touch pad 16A has changed when the touch pad 16A is touched again. Note that the GUI item displayed in a part of the screen for performing the scroll operation may be regarded as a scroll unit.

The display control unit 112 controls the display (performs display control) of GUI items, such as GUI buttons, and various GUI images on the display panel 15. In addition, the display control unit 112 displays the cursor on the display panel 15 with the cursor overlaid on a GUI button that has been determined by the operation content determination unit 111 that there is a corresponding position on the display panel 15. The cursor is displayed on a GUI item to specify or select an object, such as a GUI item, displayed on the display panel 15. The cursor is an example of a selection image, and the display control unit 112 is an example of the display control unit.

When the in-vehicle input device is powered on, the display control unit 112 displays various images, such as GUI buttons and GUI images, on the display panel 15 according to the selected mode and displays the cursor at a predetermined default position or on a predetermined default GUI item. In addition, when the corresponding position of a GUI button is calculated by the operation content determination unit 111 and it is determined that the corresponding position is present in the panel, the display control unit 112 displays the cursor on the display panel 15 with the cursor overlaid on that GUI button.

When an operation input is performed on the touch pad 16A and the cursor is moved within the display panel 15 and, after that, the operation input is ended, the display control unit 112 leaves the cursor, which was displayed on an item such as a GUI item when the operation input was ended, displayed at that position.

The memory 113 stores image data representing the objects of various types of GUI items displayed on the display panel 15 (such as items for the phone of the vehicle, items for the air conditioner, items for the audio player, items for setting the GUI items representing the traveling mode of the vehicle). The memory 113 is a memory such as a RAM or a hard disk.

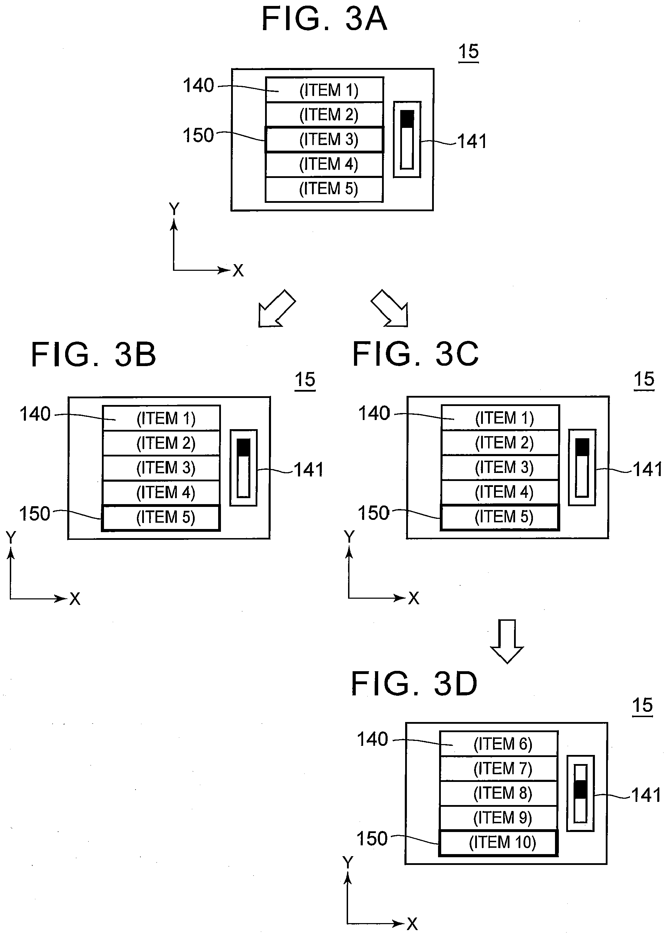

FIGS. 3A, 3B, 3C, and 3D are diagrams showing the operation of switching between the mode of the operation to scroll the screen and the mode of operation to select a GUI button 140 by the cursor 150. FIGS. 3A, 3B, 3C and 3D show the X and Y axes of the display panel 15. The X and Y axes of the display panel 15 correspond to the two axes (X and Y axes) of the touch pad 16A.

First, as shown in FIG. 3A, it is assumed that five GUI buttons 140 and a slider 141 are displayed on the display panel 15. Items 1 to 5, different from each other, are allocated to the five GUI buttons 140.

The GUI buttons 140 of items 1 to 5 are arranged in the Y-axis direction. The GUI button 140 of item 1 is displayed at the extreme end of the Y-axis positive direction (arrangement direction) of the display panel 15, and the GUI button 140 of item 5 is displayed at the extreme end of the Y-axis negative direction of the display panel 15. The extreme end of the Y-axis positive direction corresponds to an upper end of the display panel 15, and the extreme end of the Y-axis negative direction corresponds to an lower end of the display panel 15.

In FIG. 3A, the GUI button 140 of item 3 is selected with the cursor 150 displayed thereon. The cursor 150, displayed around the frame of the GUI button 140, is a selector indicating that one of the plurality of GUI buttons 140 displayed on the display panel 15 is selected.

FIG. 3A shows five GUI buttons 140 corresponding to items 1 to 5. By scrolling the image on the touch pad 16A, the GUI buttons 140 of items 6 to 10 (see FIG. 3D) can also be displayed. Although the GUI buttons 140 can be scrolled by the slider 141, the operation method not using the slider 141 will be described below.

It is assumed that the GUI button 140 of item 3 is selected by the cursor 150 as shown in FIG. 3A. In this state, to select the GUI button 140 of item 5 by the cursor 150 as shown in FIG. 3B, the user performs the finger sliding operation so as to move the operation input position in the Y-axis negative direction with the finger touching (that is, not released from) the touch pad 16A.

Then, when the cursor 150 is displayed on the GUI button 140 of item 5, the user continues the finger sliding operation in the Y-axis negative direction without releasing the finger from the touch pad 16A. That is, the user performs the finger sliding operation in the Y-axis negative direction so as to move the cursor 150 further in the Y-axis negative direction exceeding the GUI button 140 of item 5.

When the operation input is performed in this way, the operation content determination unit 111 determines that the operation for displaying the cursor 150 on item 5 is performed and displays the cursor 150 on the GUI button 140 of item 5 without scrolling the GUI buttons 140. When such an operation is performed and the end of the scroll direction of the displayed GUI buttons 140 is selected, the operation may be regarded as an operation in which the movement of the operation input position becomes a continuous movement in the scroll direction. The end in the scroll direction is the lower end of item 5.

Similarly, it is assumed that the GUI button 140 of item 3 is selected by the cursor 150 as shown in FIG. 3A. In this state, to scroll the GUI buttons 140 for displaying the GUI buttons 140 of items 6 to 10 on the display panel 15, the user first preforms the finger sliding operation in the Y-axis negative direction, with the finger touching (that is, not released from) the touch pad 16A, to move the cursor 150 to the GUI button 140 of item 5 displayed at the extreme end of the display panel 15 as shown in FIG. 3C.

Next, in the state where the GUI button 140 of item 5 is selected by the cursor 150 as shown in FIG. 3C, the user once releases the finger from the touch pad 16A and then touches the touch pad 16A again and, with the GUI button 140 of item 5 selected by the cursor 150, performs the finger sliding operation by moving the finger in the Y-axis negative direction.

In this way, with the GUI button 140 of item 5 (which is displayed at the extreme end of the display panel 15) selected by the cursor 150, the user once releases the finger from the touch pad 16A and then touches the touch pad 16A again. After that, with the GUI button 140 of the item 5 selected by the cursor 150, the user moves the finger in the Y-axis negative direction. By doing so, the GUI buttons 140 currently displayed on the display panel 15 are scrolled, and the GUI buttons 140 of items 6 to 10 are displayed on the display panel 15 as shown in FIG. 3D. When such an operation is performed and the end of the scroll direction of the displayed GUI buttons 140 is selected, the operation may be regarded as an operation in which the movement of the operation input position becomes a non-continuous movement in the scroll direction. The non-continuous operation is an operation in which the fingers once leave the touch pad 16A.

At this time, by adjusting the movement amount of the finger in the negative direction of the Y axis, the consecutive five GUI buttons 140 out of items 2 to 10 can be displayed. That is, by adjusting the movement amount of the finger (finger sliding operation) in the Y-axis negative direction, one of the combinations of five GUI buttons 140 (that is, items 2 to 6, items 3 to 7, items 4 to 8, items 5 to 9, and item 6 to 10) can be displayed on the display panel 15.

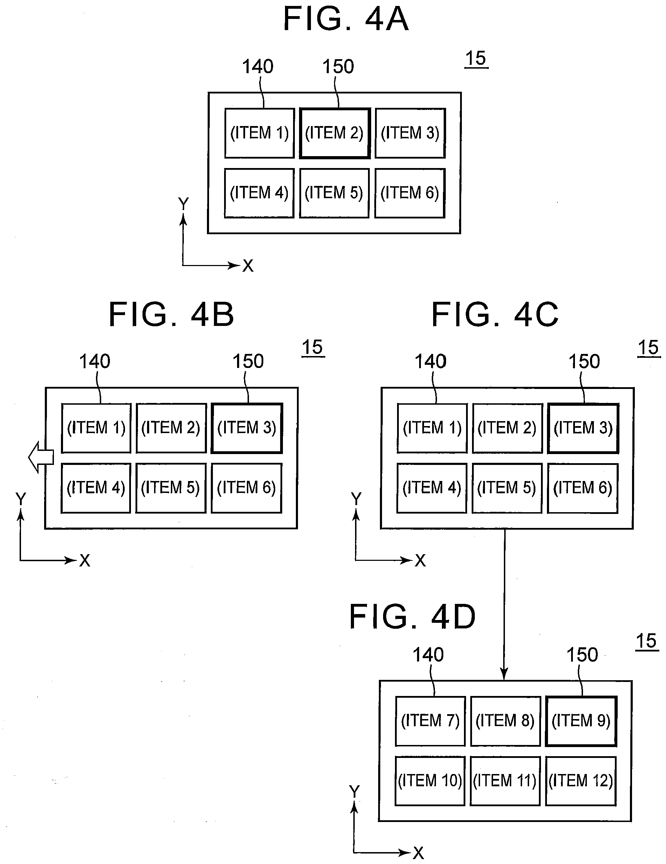

FIGS. 4A, 4B, 4C, and 4D are diagrams showing the operation of switching between the mode to scroll an image and the mode to select the GUI button 140 by the cursor 150. FIG. 4A, 4B, 4C and 4D show the X and Y axes of the display panel 15. FIG. The X and Y axes of the display panel 15 correspond to the two axes (X and Y axes) of the touch pad 16A.

First, as shown in FIG. 4A, it is assumed that six GUI buttons 140 are displayed on the display panel 15 in the form of two rows and three columns. Items 1 to 6, different from each other, are allocated to the six GUI buttons 140.

The GUI buttons 140 of items 1 to 3 are arranged in the X-axis direction on the Y-axis positive direction side, and the GUI buttons 140 of items 4 to 6 are arranged in the X-axis direction on the Y-axis negative direction side. The GUI buttons 140 of items 1 and 4 are displayed at the extreme end of the negative side in the X-axis direction (arrangement direction) of the display panel 15, and the GUI buttons 140 of items 3 and 6 are displayed at the extreme end of the positive side in the X-axis direction of the display panel 15.

When viewed in the Y-axis direction, the GUI buttons 140 of items 1 to 3 are displayed at the extreme end of the positive side in the Y-axis direction (arrangement direction) of the display panel 15, and the GUI buttons 140 of items 4 to 6 are displayed at the extreme end of the negative side in the Y-axis direction of the display panel 15. The operation in which the operation input is performed in the X-axis direction will be described below.

In FIG. 4A, the GUI button 140 of item 2 is selected with the cursor 150 is displayed thereon.

FIG. 4A shows six GUI buttons 140 corresponding to items 1 to 6. By performing the operation to scroll the image on the touch pad 16A, the GUI buttons 140 of items 7 to 12 can also be displayed (see FIG. 4D).

It is assumed that the GUI button 140 of item 2 is selected by the cursor 150 as shown in FIG. 4A. In this state, to select the GUI button 140 of item 3 by the cursor 150 as shown in FIG. 4B, the user performs the finger sliding operation so as to move the operation input position in the X-axis positive direction with the finger touching (that is, not released from) the pad 16A.

Then, when the cursor 150 is displayed on the GUI button 140 of item 3, the user continues the finger sliding operation in the X-axis positive direction without releasing the finger from the touch pad 16A. That is, the user performs the finger sliding operation in the X-axis positive direction so as to move the cursor 150 further in the X-axis positive direction exceeding the GUI button 140 of item 3.

When the operation input is performed in this way, the operation content determination unit 111 determines that the operation for displaying the cursor 150 on item 3 is performed and displays the cursor 150 on the button 140 of item 3 without scrolling the GUI buttons 140.

Similarly, it is assumed that the GUI button 140 of item 2 is selected by the cursor 150 as shown in FIG. 4A. In this state, to scroll the GUI buttons 140 for displaying the GUI buttons 140 of items 7 to 12 on the display panel 15, the user first performs the finger sliding operation in the X-axis positive direction, with the finger touching (that is, not released from) the touch pad 16A, to move the cursor 150 to the GUI button 140 of item 3 displayed at the extreme end of the display panel 15 as shown in FIG. 4C.

Next, in the state where the GUI button 140 of item 3 is selected by the cursor 150 as shown in FIG. 4C, the user once releases the finger from the touch pad 16A and then touches the touch pad 16A again and, with the GUI button 140 of item 3 selected by the cursor 150, performs the finger sliding operation by moving the finger in the X-axis positive direction.

In this way, with the GUI button 140 of item 3 (which is displayed at the extreme end of the display panel 15) selected by the cursor 150, the user once releases the finger from the touch pad 16A and then touches the touch pad 16A again. After that, with the GUI button 140 of item 3 selected by the cursor 150, the user moves the finger in the X-axis positive direction. By doing so, the GUI buttons 140 currently displayed on the display panel 15 are scrolled, and the GUI buttons 140 of items 7 to 12 are displayed on the display panel 15 as shown in FIG. 4D.

When the cursor 150 is moved over the GUI buttons 140 of items 2 and 5 and then displayed on the GUI button 140 of item 6, the operation similar to that described above also causes the GUI buttons 140 of items 7 to 12 to be displayed on the display panel 15.

In FIGS. 3A, 3B, 3C, and 3D and FIGS. 4A, 4B, 4C, and 4D, the GUI buttons 140 are used in the description. The above description applies also to the GUI items other than the button type GUI items such as the slider type and dial type GUI items.

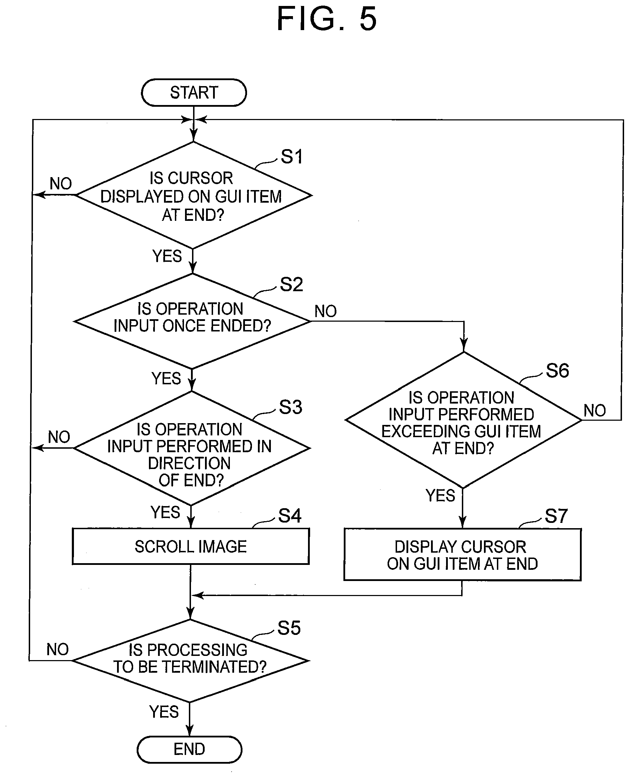

FIG. 5 is a flowchart showing the processing executed by the operation content determination unit 111 of the DCU 110.

The DCU 110 starts the processing when the ignition switch of the vehicle is turned on (START).

The operation content determination unit 111 determines whether the cursor 150 is displayed on the GUI item at the end (step S1).

Next, if it is determined that the cursor 150 is displayed on the GUI item at the end (S1: YES), the operation content determination unit 111 determines whether the operation input is once ended, based on the output of the touch pad 16A (step S2). The state in which the operation input is once ended means that the finger has released from the touch pad 16A for a period of time that is long enough for the touch pad 16A to detect that no operation input is performed.

If it is determined that the operation input is once ended (S2: YES), the operation content determination unit 111 determines whether the operation input is performed in the end direction (step S3). The end direction is the direction of the operation input in which the cursor 150 is moved along the arrangement direction of a plurality of GUI items until the cursor 150 is displayed on the GUI item at the end.

If it is determined that the operation input is performed in the end direction (S3: YES), the operation content determination unit 111 scrolls the image of the GUI item into the end direction (step S4).

When the processing in step S4 is ended, the operation content determination unit 111 determines whether to terminate the processing (step S5). The processing is terminated, for example, when the ignition switch is turned off.

If it is determined that the processing is not to be terminated (S5: NO), the operation content determination unit 111 returns the flow to step S1. If it is determined that the processing is to be terminated (S5: YES), the operation content determination unit 111 terminates the series of processing (END).

If it is determined in step S2 that the operation input is not once ended (S2: NO), the operation content determination unit 111 determines whether the operation input is performed in such a way that the GUI item at the end is exceeded (step S6). An operation input that exceeds the GUI item at the end means that the operation input is performed to move the cursor 150 to the GUI item at the end and then, with the cursor 150 displayed on the GUI item at the end, the operation input is performed to move the cursor 150 further into the same direction.

If it is determined that the operation input is performed exceeding the GUI item at the end (S6: YES), the operation content determination unit 111 leaves the cursor 150 displayed on the GUI item at the end (step S7). When the processing of step S 7 is terminated, the flow proceeds to step S5.

On the other hand, if it is determined that the operation input is not performed in such a way that the GUI item at the end is exceeded (S6: NO), the operation content determination unit 111 returns the flow to step S1.

If it is determined that the cursor 150 is not displayed on the GUI item at the end (S1: NO), the operation content determination unit 111 returns the flow to step S1.

As described above, in the state in which the cursor 150 is displayed on the GUI item at the end, the in-vehicle input device allows the user to perform one of the two operations, the operation to scroll the GUI items displayed on the display panel 15 and the operation to leave the cursor 150 displayed on the GUI item at the end, depending upon whether the operation input is once ended and is performed again within the GUI item at the end or the operation input is not ended but is performed exceeding the GUI item at the end.

The user can perform one of the two operations, not by providing a dedicated switch, but by performing the operation input on the touch pad 16A. In addition, these two operations, which are simple to perform, can be realized with a minimum of operations.

These two operations can be performed simply by looking at the display panel 15 to confirm that the cursor 150 is displayed on the GUI item at the end, with no need to look at the touch pad 16A. The burden of these operations is so small even while the vehicle is traveling that the user can easily perform one of them.

Therefore, the present invention can provide the in-vehicle input device and the in-vehicle input device control method that can easily switch between image-scrolling operation mode and non-image-scrolling operation mode without providing a dedicated switch.

In the above description, the mode in which the touch pad 16A is an example of the operation input detection unit is described. Instead of this, a device that detects a gesture performed by the user may be used as the operation input detection unit.

Although the in-vehicle input device and the in-vehicle input device control method of the exemplary embodiment of the present invention have been described above, it should be noted that the present invention is not limited to the disclosed embodiment but that various modifications and changes may be added without departing from the scope of the claims.

## Claims

1. An in-vehicle input device comprising:
an operation input detection unit (16A) arranged in a vehicle interior, the operation input detection unit (16A) configured to detect an input made by a user, the input specifying an operation direction;
a display unit (15) arranged at a position in the vehicle interior different from a position of the operation input detection unit (16A), the display unit (15) configured to display a plurality of objects arranged along a first direction, the first direction is a direction from a first end of the display unit to a second end of the display unit, the plurality of objects being scrollable in the first direction;
a display control unit (112) configured to
control the displaying by the display unit (15), and
switch a display state of an object in the plurality of objects between a first state and a second state in response to the input made by the user, the first state representing that the object is selected, the second state representing that the object is not selected, one of the plurality of objects being displayed in the first state; and an operation content determination unit (111) configured to
scroll the plurality of objects in the first direction and cause the display control unit (112) to display the objects when the input by the user once becomes undetected by the operation input detection unit (16A) and, after that, an input specifying a second direction is detected in a state where an object nearest to the first end of the display unit is selected, the second direction is a direction from the second end of the display unit to the first end of the display unit, and
cause the display control unit (112) to hold the plurality of objects and the state where the object nearest to the first end of the display unit is selected when the input specifying the second direction is continuously detected by the operation input detection unit without interruption in the state where the object nearest to the first end of the display unit is selected.

2. The in-vehicle input device according to claim 1, wherein
the operation input detection unit (16A) includes a position detection unit configured to detect a position indicated by the user and the input specifying the operation direction by a trajectory of a change in the position.

3. The in-vehicle input device according to claim 1 or 2, wherein
the display control unit (112) is configured to control the display unit so as to display continuously the object which is displayed immediately before the input becomes undetected when the input is detected again by the operation input detection unit (16A) after changing from a state in which the input is detected by the operation input detection unit (16A) to a state in which the input is not detected by the operation input detection unit (16A).

4. The in-vehicle input device according to any one of claims 1 to 3, wherein
the first state is a state that an image of a cursor or a pointer is overlaid on the object.

5. An in-vehicle input system comprising:
a screen configured to display a selection state of an operation of an apparatus mounted in a vehicle interior;
a detection unit configured to detect a movement of a hand or a finger of a user, wherein
the screen is configured to display a scroll unit in a part of an area on the screen to allow the selection state to be changed by scrolling,
when an end of the scroll unit in a selection direction is selected by the detection unit, the selection state of the end of the selection direction of the scroll unit is held if it is detected that the movement of the hand or the finger detected by the detection unit is a continuous movement in a scroll direction, and the selection state that is not yet displayed is scrolled for display if it is detected that the movement of the hand or the finger detected by the detection unit is a non-continuous movement in the scroll direction.

6. An in-vehicle input device control method comprising:
detecting, by an operation input detection unit (16A), an input made by a user, the operation input detection unit (16A) being arranged in a vehicle interior, the input specifying an operation direction;
displaying, by a display unit (15) arranged at a position in the vehicle interior different from a position of the operation input detection unit, a plurality of objects arranged along a first direction, the first direction is a direction from a first end of the display unit to a second end of the display unit, the plurality of objects being scrollable in the first direction;
controlling, by a display control unit (112), the display performed by the display unit (15);
switching a display state of an object in the plurality of objects between a first state and a second state in response to the input made by the user, the first state representing that the object is selected, the second state representing that the object is not selected, one of the plurality of objects being displayed in the first state;
scrolling, by an operation content determination unit (111), the plurality of objects in the first direction and causing the display control unit (112) to display the objects when the input by the user once becomes undetected by the operation input detection unit (16A) and, after that, an input specifying a second direction is detected in a state where an object nearest to the first end of the display unit is selected, the second direction is a direction from the second end of the display unit to the first end of the display unit; and
causing, by the operation content determination unit (111), the display control unit (112) to hold the plurality of objects and the state where the object nearest to the first end of the display unit is selected when the input specifying the second direction is continuously detected by the operation input detection unit without interruption in the state where the object nearest to the first end of the display unit is selected.
